# EUROPEAN PATENT APPLICATION

(11) **EP 1 331 680 A2**
(43) Date of publication of application: **30.07.2003**
(21) Application number: 03001124.1
(22) Date of filing: 20.01.2003
(51) Int. Cl.: H01M 2/10, H01M 8/00, H01M 8/24, G06F 1/26

(54) **Portable information device capable of using fuel cell**

(30) Priority: 29.01.2002 JP 2002020361
(71) Applicant: Kabushiki Kaisha Toshiba, Tokyo (JP)
(72) Inventor: Hachiya, Shogo, c/o Intellectual Property Division, Tokyo 105-8001 (JP); Ozeki, Akihiro, c/o Intellectual Property Division, Tokyo 105-8001 (JP)
(74) Representative: Henkel, Feiler, Hänzel

(57) **Abstract**

An information device has a main body (2). A display (6) is rotatably provided on the main body (22). A connector (39) is provided on the main body. A fuel cell (15) is detachably connected to the connector (39) so that it can apply power to the connector (39).

## Description

The present invention relates to a portable information device capable of using a fuel cell.

In recent years, it is proposed to use a fuel cell in a notebook personal computer (hereinafter referred to as notebook PC), which is an example of a portable information device. The fuel cell is advantageous in that it can produce power unlimitedly as long as it is fueled.

The fuel cell is provided inside the main body of the notebook PC. Cell batteries of various types are known, and a DMFC (direct methanol fuel cell) is one of the known types. The DMFC is a fuel cell which uses methanol as its liquid fuel (methanol is comparatively low in price and is easy to handle).

In general, a DMFC comprises the following: a fuel tank which contains a high concentration of methanol; a mixing tank in which the methanol supplied from the fuel tank is diluted with water; a liquid-supply pump which compressively supplies the methanol diluted in the mixing tank toward a fuel cell panel; and an air-supply pump which supplies air toward the fuel cell panel.

Therefore, the fuel cell is inevitably larger than a secondary battery, such as a lithium-ion battery, contained in the notebook PC.

The notebook PC capable of using a fuel cell is very convenient for a long use in a place where no AC power source is available. However, owing to the structure of the main body of the notebook PC, incorporating a relatively large fuel cell, the main body is large and heavy. Therefore, the notebook PC of this type is disadvantageous in handling when the fuel cell is unnecessary, for example, when the AC power source is available.

Accordingly, an embodiment of the present invention may provide an easy-to-handle-portable information device, which has a fuel cell connectable to the main body when necessary.

According to an aspect of the present invention, there is provided an information device comprising:
a main body; a display rotatably provided on the main body; and a fuel cell independent of the main body and can be electrically connected thereto.

According to another aspects of the present invention, since the fuel cell can be electrically connected to the main body when necessary and detached therefrom when unnecessary, the information device can be handled easily.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a perspective view of a notebook PC according to a first embodiment of the present invention;
FIG. 2 is a perspective view showing the notebook PC and a fuel cell separated from each other;
FIG. 3 is a perspective view showing the upper portion of the casing of a fuel cell in a state where. part of the upper surface is cut away;
FIG. 4 is a plan view showing the upper portion of the casing of a fuel cell in a state where part of the upper surface is cut away;
FIG. 5 is an explanatory diagram illustrating how the notebook PC is powered;
FIG. 6 is a perspective view of a notebook PC according to a second embodiment of the present invention;
FIG. 7 is a diagram showing a connecting portion provided on the back surface of the casing of the fuel cell;
FIG. 8 is a perspective view of a notebook PC according to a third embodiment of the present invention;
FIG. 9 is a perspective view of a notebook PC according to a fourth embodiment of the present invention; and
FIG. 10 is a perspective view of a notebook PC according to a fifth embodiment of the present invention.

Embodiments of the present invention will now be described with reference to the accompanying drawings.

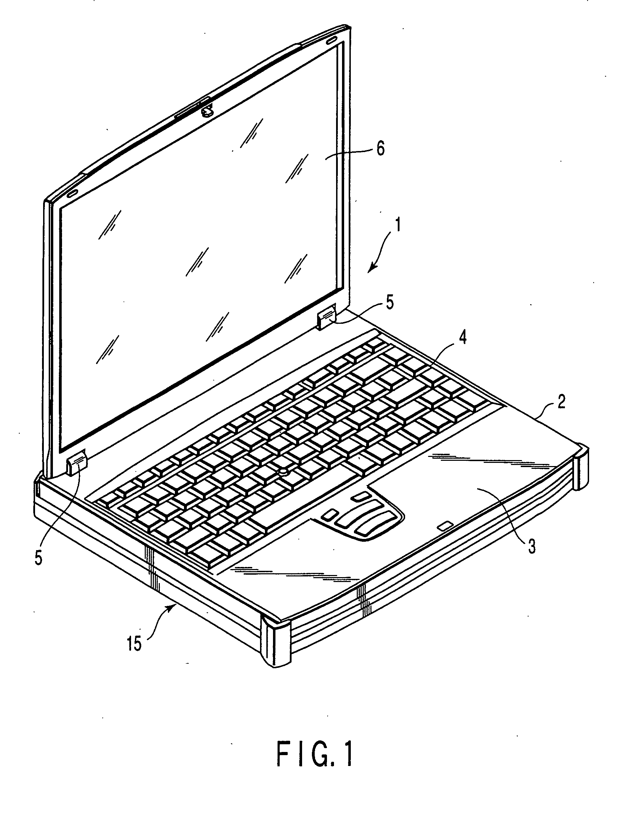

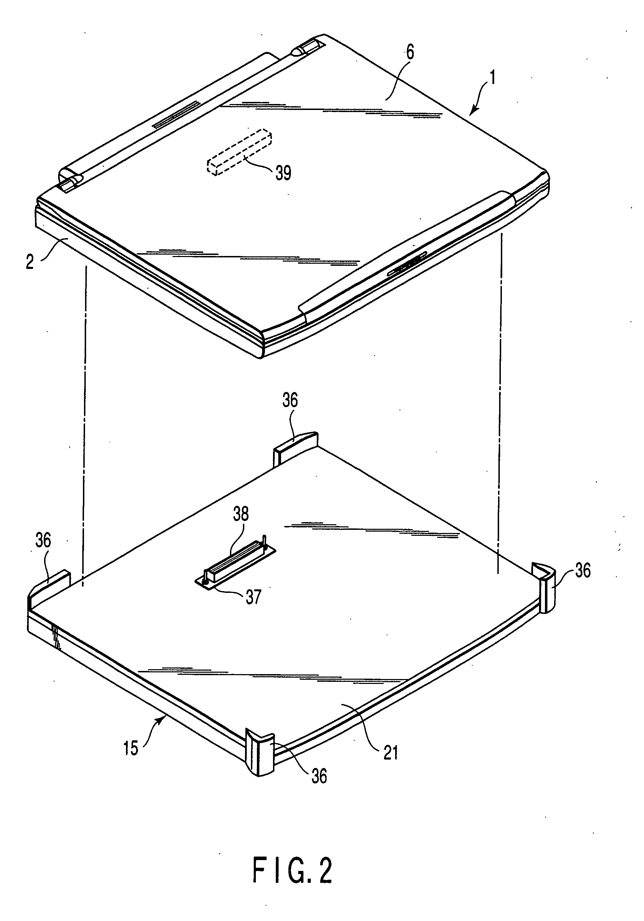

FIGS. 1 through 5 illustrate the first embodiment of the present invention. FIGS. 1 and 2 show a notebook PC 1, which is an example of a portable information device. The notebook PC 1 comprises a main body 2. A palm rest 3 is formed on the front portion of the upper surface of the main body 2, and a keyboard 4 is located behind the palm rest 3.

A pair of hinges 5 are provided on the rear portion of the upper surface of the main body 2. The lower end of a liquid crystal display 6 is rotatably coupled to the main body 2 by means of the hinges 5. The display 6 can be held in an open position at a predetermined angle with respect to the main body 1, as shown in FIG. 1. It also can be held in a closed position to cover the upper surface of the main body 2, as shown in FIG. 2.

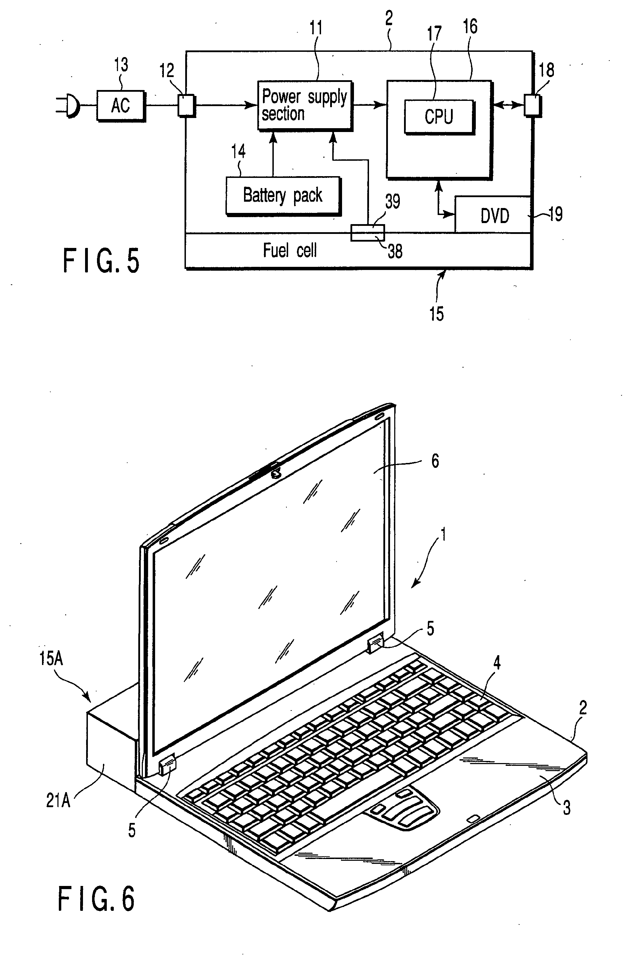

As FIG. 5 shows, a power supply section 11 is located inside the main body 2. The power supply section 11 is powered by an AC adaptor 13 connected to an AC connector 12. The AC connector 12 is provided, for example, on the rear face of the main body 2.

The power supply section 11 can be powered not only by the AC adaptor 13 described above but also by a secondary battery pack 14 incorporated in the main body 2 and a fuel cell 15. The fuel cell 15 is separate from the main body 2 and can be electrically connected thereto, as will be described later.

Thus, the power supply section 11 can be selectively powered by one of the AC adaptor 13, the battery pack 14 and the fuel cell 15.

The power supply section 11 applies power to a main board 16. A CPU 17 is mounted on the main board 16. A modem 15, a DVD 19, etc. are connected to the main board 16.

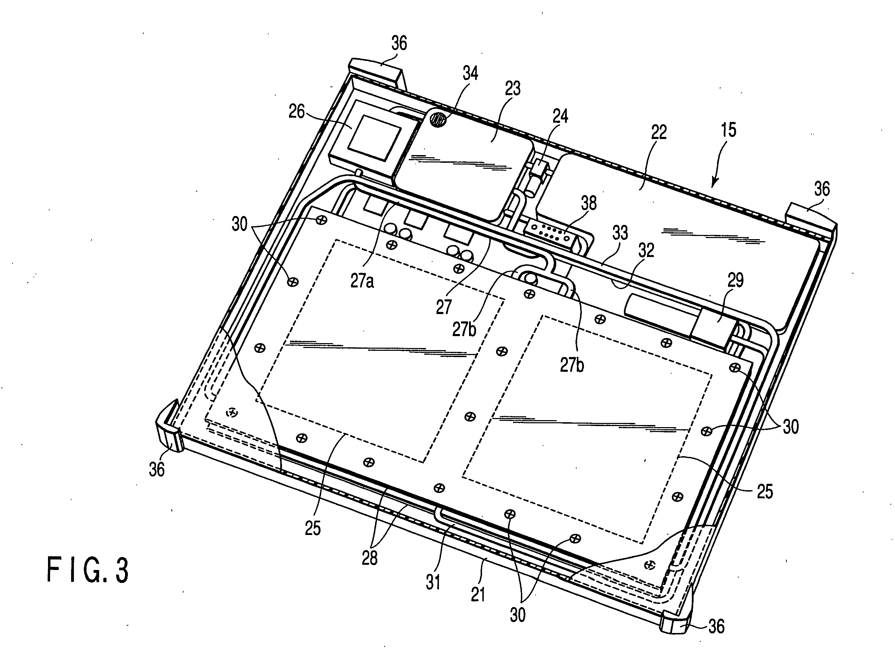

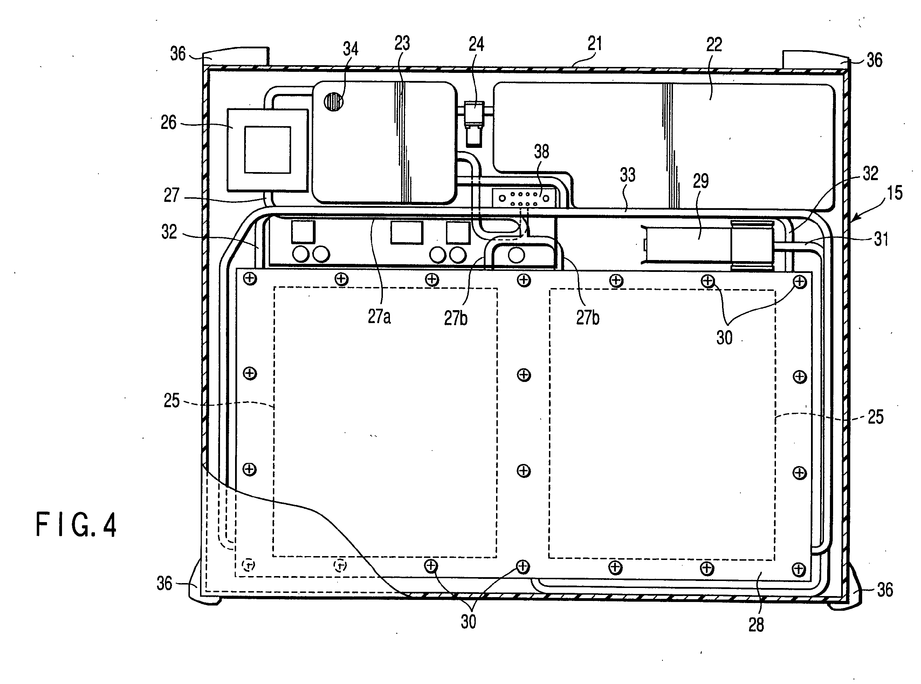

A DMFC, which uses methanol as a liquid fuel, is employed as the fuel cell 15. As FIGS. 2 to 4 show, the fuel cell 15 comprises a casing 21, whose plane figure is substantially the same as that of the main body 2. As FIGS. 3 and 4 show, a fuel tank 22 is disposed inside the casing 21, and the fuel tank 22 contains a high concentration of methanol used as a liquid fuel. The fuel tank 22 is connected to a mixing tank 23, and a first liquid-supply pump 24 supplies the methanol from the fuel tank 22 to the mixing tank 23.

The methanol supplied to the mixing tank 23 is diluted to a predetermined concentration with water, which functions as a solvent and is supplied from a pair of fuel cell panels 25 to be described later. A second liquid-supply pump 26 is connected to the mixing tank 23. The second liquid-supply pump 26 supplies the diluted methanol toward the anodes of the fuel cell panels 25 through a liquid-supply pipe 27.

In the initial state, the mixing tank 23 contains diluted methanol, and the two fuel cell panels 25 also contain diluted methanol. Therefore, water (i.e., a solvent) does not have to be supplied to the mixing tank 23.

The liquid-supply pipe 27 includes a main pipe portion 27a and a pair of branch pipe portions 27b. The main pipe portion 27a has its one end connected to the outlet portion of the second liquid-supply pump 26. The branch pipe portions 27b are symmetric with respect to the other end of the main pipe portion 27a. The branch pipe portions 27b are respectively connected to the fuel cell panels 25. In FIG. 4, the branch pipe portions 27b are shown as being connected to the upper side portion of the fuel cell panels 25.

As indicated by the dashed lines in FIGS. 3 and 4, each of the two fuel cell panels 25 is rectangular. The two fuel cell panels 25 are arranged side by side and are held by two holding plates 28 in such a manner that the upper and lower surfaces are in contact with the holding plates 28. The two holding plates 28 are secured by means of a plurality of fastening screws 30 located on the peripheral portions of the fuel cell panels 25.

The present embodiment employs two fuel cell panels 25, and these panels 25 are held between the holding plates 28. In comparison with the case where a single fuel cell panel is employed, the holding force is uniformly distributed onto the entire surfaces of the fuel cell panels, and the fuel cell panels 25 are allowed to maintain their desirable performance.

The liquid-supply pipe 27 has one end connected to the second liquid-supply pump 26 and the other end connected to the two branch pipe portions 27b. Through these branch pipe portions, the liquid-supply pipe 27 is connected to the fuel cell panels 25. In comparison with the case where the two fuel cells 25 are individually connected to piping, the overall length of the piping can be reduced. In addition, the paired fuel cell panels 25 can be supplied with a liquid fuel under the same condition.

An air-supply pump 29 supplies air through an air-supply tube 31 to the cathode of each fuel cell panel 25. The methanol and air supplied to each fuel cell panel 25 react in an electrolyte film, which is located between the anode and the cathode.

This reaction generates power between the anode and the cathode. Simultaneously, carbon dioxide is produced from the anode, and water is produced from the cathode. The carbon dioxide produced from the anode is supplied from the fuel cell panel 25 to the mixing tank 23 by way of the corresponding one of discharge-liquid tubes 33. On the other hand, the water produced from the cathode is supplied through the corresponding one of discharge-gas tubes 32 into the mixing tank 23 in the state of vapor. The mixing tank 23 has a discharge section 34 that allows only gas to pass therethrough. The carbon dioxide and the vapor, returned into the mixing tank 23 by way of the discharge-liquid tubes 33 and discharge-gas tubes 32, are discharged from the discharge section 34.

As FIG. 2 shows, positioning members 36 are projected from the front end portions and the rear end portions of the periphery of the upper surface of the casing 21 of the fuel cell 15. The positioning members 36 serves to position the main body 2 of the notebook PC 1 on the upper surface of the casing 21. An opening 37 is formed in a widthwise central portion and somewhat rearward of the upper surface of the casing 21. A first connector 38 projects from the opening 37. Power generated by the fuel cell 15 is supplied to the connector 38.

A second connector 39 is provided on the lower surface of the main body 2. When the main body 2 is positioned by the positioning members 36 and put on the upper surface of the casing 21 of the fuel cell 15, the second connector 39 is electrically connected to the first connector 38. As a result, the power generated by the fuel cell 15 is supplied to the power supply section 11 of the notebook PC 1. The second connector 39 does not project from the lower surface of the main body 2 of the notebook PC 1.

In the notebook PC 1 with the above structure, the fuel cell 15 is independent of the main body 2 and can be electrically connected thereto. Therefore, when the notebook PC 1 is used in a place where it can be powered by the AC adaptor 13, the fuel cell 15 may be separated from the main body 2. In this case the overall structure can be compact and light. Consequently, the notebook PC 1 can be handled easily.

When the notebook PC is in a place where it cannot be powered by the AC adapter 13, the fuel cell 15 is put under the main body 2 as FIG. 1 shows, and the first connector 38 provided on the fuel cell 15 is connected to the second connector 39 provided on the lower surface of the main body 2.

Since the power generated by the fuel cell 15 can be supplied to the notebook PC 1 in this manner, the notebook PC 1 can be used practically without limitation as long as the liquid fuel is maintained.

The plane figure of the casing 21 of the fuel cell 15 is substantially the same as that of the main board 2 of the notebook PC 1, under which the fuel cell 15 is located. Thus, the fuel cell 15 looks integral with the main body 2 in appearance. Therefore, even when the fuel cell 15 is used, it is space-saving and does not impair the appearance of the notebook PC 1.

The positioning members 36, provided on the four corner portions of the fuel cell 15, serves to locate the notebook PC 1 at a predetermined position relative to the fuel cell 15. Therefore, the second connector 39 provided on the lower surface of the notebook PC 1 can be easily and reliably connected to the first connector 38 provided on the upper surface of the fuel cell 15.

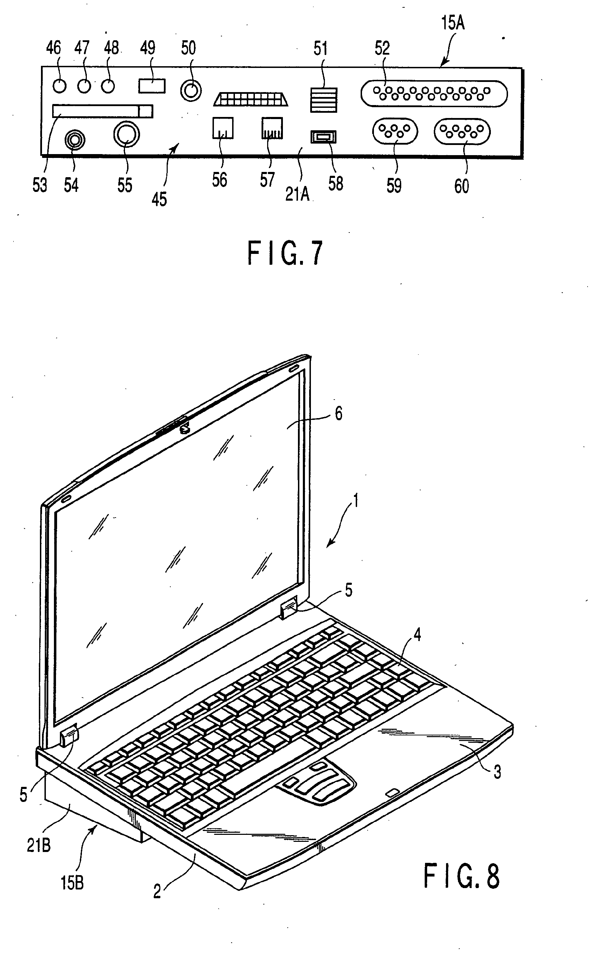

FIGS. 6 and 7 show the second embodiment of the present invention. In this embodiment, a fuel cell 15A has a rectangular pillar-shaped casing 21A. One side surface of the casing 21A is brought into contact with an outer surface (i.e., the back surface) of the main body 2 of the notebook PC 1. Although not shown, a first connector is provided on the side surface of the casing 21A and a second connector is provided on the back surface of the main body 2. These connectors electrically connect the fuel cell 15A and the main body 2.

As FIG. 7 shows, a connecting portion 45 to be connected to an external device is formed on the surface opposite to said side surface of the casing 21A that is brought into contact with the main body 2. The connecting portion 45 includes a MIKE-IN jack 46, a MIKE-OUT jack 47, an AUX-IN jack 48, a FIR jack 49, a TV-OUT jack 50, a USB jack 51, a parallel port 52, a PC card slot 53, a DC-IN jack 54, a PS/2 jack 55, a modem jack 56, a LAN jack 57, an IEEE (1394) jack 58, a serial port 59, a RGB-OUT port 60, etc.

Since the fuel cell 15A is attached to the back surface of the main body 2, the height of the main body 2 does not change whether the fuel cell 15A is attached or not. Therefore, even when the fuel cell 15A is used, the operability of the keyboard 4 does not change.

In addition, the connecting portion 45 is formed on the surface of the fuel cell 15A opposite to the main body 2 side. Therefore, even when the fuel cell 15A is attached to the back surface of the main body 2, it cannot interfere with interconnection between the main body 2 and an external device.

FIG. 8 shows the third embodiment of the present invention. In this embodiment, a fuel cell 15B is provided under the main body 2 as in the first embodiment. However, the depth of the fuel cell 15B is substantially half that of the main body 2.

The fuel cell 15B has a tapered casing 21B, whose thickness gradually decreases from the back end toward the front end. Therefore, when the fuel cell 15B is attached to the lower surface of the main body 2, the main body 2 is supported to incline such that the front end side of the main body 2 is lower than the rear end side thereof.

When the fuel cell 15B is provided on the lower surface of the main body 2, the main body 2 can be inclined toward the front end side, since the thickness of the fuel cell 15B gradually decreases. Therefore, even when the fuel cell 15B is provided under the main body 2, the operability of the keyboard 4 on the upper surface of the main body 2 is not compromised.

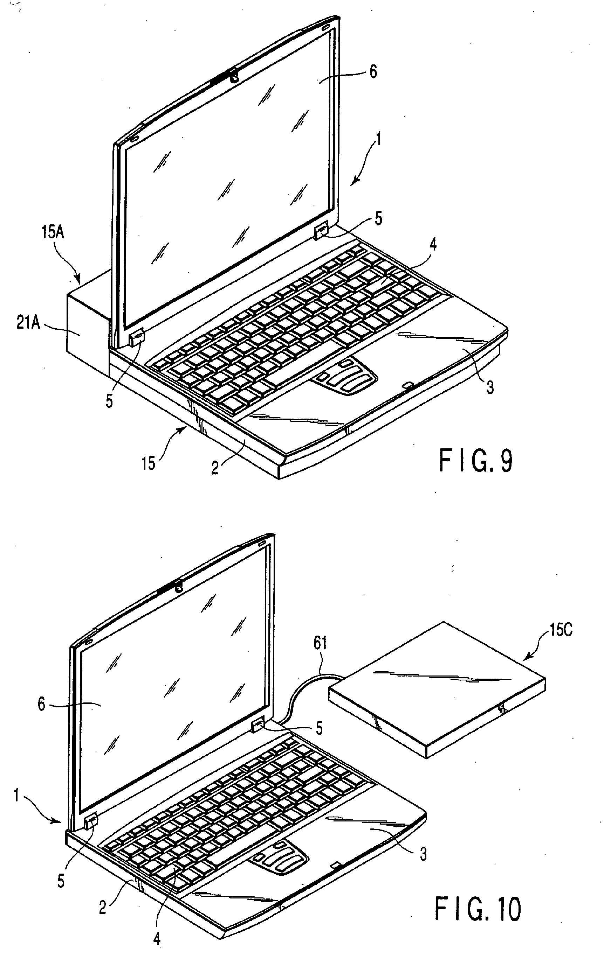

FIG. 9 shows the fourth embodiment of the present invention. In this embodiment, the fuel cell 15 according to the first embodiment is attached to the lower surface of the main body 2 and the fuel cell 15A according to the second embodiment is attached to the back surface of'the main body 2. As in the second embodiment, the casing 21A of the fuel cell 15A, attached to the back surface of the main body 2, has a connecting portion (not shown) as shown in FIG. 7.

FIG. 10 shows the fifth embodiment of the present invention. In this embodiment, a fuel cell 15C is detachably connected to the main body 2 of the notebook PC 1 by a cable 61.

This structure allows the fuel cell 15C to be arranged without being limited by the position of the notebook PC 1. Therefore, the notebook PC can be handled more easily.

The present invention is not limited to the above embodiments but can be modified variously within the scope of the invention. For example, in the first and fourth embodiments, in which the fuel cell 15 is provided on the overall lower surface of the main body 2, the casing 21 of the fuel cell 15 may be tapered such that the thickness thereof gradually decreases from the back end toward the front end.

With this structure, even if the fuel cell 15 is provided on the overall lower surface the main body 2, the operability of the keyboard 4 on the upper surface of the main body 2 can be improved.

In the second embodiment shown in FIG. 6, the fuel cell 15B is provided on an outer surface (i.e., the back surface) of the main body 2. Instead, however, it may be provided on a side surface perpendicular to the back surface.

The fuel cell is not limited to the DMFC, but may be another type of cell, such as a PEFC (polymer electrolyte fuel cell).

## Claims

1. An information device **characterized by** comprising:
a main body (2);
a display (6) rotatably provided on the main body (2);
a fuel cell (15) detachably connected to the main body (2), the fuel cell (15) being capable of applying power to the main body (12); and
a connector (39) which is provided on a surface of the main body (2), and electrically connected to and powered by the fuel cell (15).

2. The information device according to claim 1, **characterized in that** the fuel cell (15) is electrically connectable to a lower surface of the main body (2).

3. The information device according to claim 1, **characterized in that** the fuel cell (15A) is electrically connectable to an outer surface of the main body (2).

4. The information device according to claim 3, **characterized in that** the fuel cell (15A) is electrically connectable to the main body (2) such that one surface thereof faces a back surface of the main body (2), and another surface of the fuel cell (15) has a connecting portion (45) to be connected with an external device.

5. The information device according to claim 1, **characterized in that** the fuel cell (15, 15A) is electrically connectable to a lower surface and an outer surface of the main body (12).

6. The information device according to claim 1, **characterized in that** the fuel cell (15B) is tapered such that thickness thereof decreases from a rear end of the main body (2) toward a front end thereof, and electrically connectable to a rear portion of a lower surface of the main body (2).

7. The information device according to claim 1, **characterized in that** the fuel cell (15) has a casing (21), which includes a fuel tank (22) containing a liquid fuel, a mixing tank (23) in which the liquid fuel supplied from the fuel tank (22) is diluted with solvent, two fuel cell panels (25) arranged side by side and held between two holding plates (28), a liquid-supply pipe (27) having one end connected to the mixing tank (23) via a liquid-supply pump (26) and another end divided into two branches respectively connected to the two fuel cell panels (25), an air-supply pump (29) which supplies air to the two fuel cell panels (25), and an gas discharge pipe (31) and a liquid discharge pipe (33) which respectively return gas and liquid discharged from the two fuel cell panels (25) to the mixing tank (23).

8. An information device **characterized by** comprising:
a main body (2);
a display (6) rotatably provided on the main body (2);
a fuel cell (15) to power the main body (2);
a first connector (38) which is provided on an upper surface of the fuel cell (15); and
a second connector (39) which is provided on a lower surface of the main body (2), and detachably and electrically connected to the first connector (38) to apply power generated by the fuel cell (15) to the main body (2), when the upper surface of the fuel cell (15) is connected to the lower surface of the main body (2).

9. The information device according to claim 8, **characterized in that** the fuel cell (15) has a plane figure substantially same in dimensions as that of the main body (2).

10. The information device according to claim 9, **characterized by** further comprising positioning members (36) provided on four corner portions of the fuel cell (15), which position the second connector (39) to a position where it is connected to the first connector (38).

11. The information device according to claim 8, **characterized by** further comprising an AC adapter (127) and a battery pack (14) connected to the main body (2), wherein the main body (2) is selectively powered by one of the AC adapter (127), the battery pack (14) and the fuel cell (15).
